## Europäisches Patentamt

## European Patent Office

## Office européen des brevets

(11) Veröffentlichungsnummer: **0 060 312**
**B1**

(12) **EUROPÄISCHE PATENTSCHRIFT**

(45) Veröffentlichungstag der Patentschrift:
**18.12.85**

(51) Int. Cl.⁴: **G 03 F 3/08**

(21) Anmeldenummer: **81101967.8**

(22) Anmeldetag: **17.03.81**

(54) **Verfahren zur partiell glättenden Retusche bei der elektronischen Farbbildreproduktion.**

(43) Veröffentlichungstag der Anmeldung:
**22.09.82 Patentblatt 82/38**

(45) Bekanntmachung des Hinweises auf die Patenterteilung:
**18.12.85 Patentblatt 85/51**

(84) Benannte Vertragsstaaten:
**AT BE CH DE FR GB IT LI NL SE**

(56) Entgegenhaltungen:
**EP - A - 0 004 078**
**WO - A - 80/02607**
**DE - A - 2 300 515**
**DE - A - 2 607 623**
**FR - A - 2 246 897**

(73) Patentinhaber: **DR.-ING. RUDOLF HELL GmbH,**
**Grenzstrasse 1-5, D-2300 Kiel 14 (DE)**

(72) Erfinder: **Hennig, Eberhard, Bundhorster Chaussee 3,**
**D-2323 Ascheberg (DE)**
Erfinder: **Klie, Jürgen, Schulkoppel 12, D-2301 Tökendorf**
**(DE)**
Erfinder: **Wellendorf, Klaus, Kreienholt 6,**
**D-2305 Kitzeberg bei Kiel (DE)**

**Beschreibung**

Die Erfindung bezieht sich auf die elektronische Reproduktionstechnik, insbesondere auf die Herstellung von korrigierten und retuschierten Farbauszügen mittels einer elektronischen Bildverarbeitungsanlage (Retuscheplatz).

Bei der elektronischen Reproduktion werden in einem Farbscanner durch optoelektronische Abtastung einer Vorlage drei primäre Farbmesswertsignale gewonnen, welche die Farbanteile Rot, Grün und Blau der abgetasteten Bildpunkte darstellen. Ein Farbkorrektur-Rechner korrigiert die Farbmesswertsignale und erzeugt daraus die zur Herstellung der Farbauszüge erforderlichen Farbauszugsignale, welche ein Mass für die im späteren Druck erforderlichen Druckfarbmengen sind. Die Farbauszugsignale werden digitalisiert und als digitale Farbwerte bildpunktweise in einem Speichermedium abgelegt.

In einer Bildverarbeitungsanlage können die gespeicherten Farbwerte verschiedener Einzelvorlagen nach einem Layout-Plan zu der Datenmenge einer Gesamtseite vereinigt oder aber nachträglich partielle Retuschen (Farb- und/oder Tonwertkorrekturen) durchgeführt werden. Partielle, d.h. auf wählbare, örtlich begrenzte Bildteile beschränkte Retuschen sind notwendig, um die im Farbkorrektur-Rechner erfolgte Korrektur zu optimieren oder aber, um nachträglich redaktionelle Änderungen und Kundenwünsche zu berücksichtigen.

Zur Aufzeichnung der retuschierten Farbauszüge werden die korrigierten Farbwerte aus dem Speichermedium ausgelesen, in analoge Farbauszugsignale zurückgewandelt und einem Farbscanner zugeführt, in dem die gerasterten oder ungerasterten Farbauszüge «Magenta», «Cyan», «Gelb» und «Schwarz» zur Herstellung von Druckformen belichtet werden.

In der DE-A-2 920 058 oder der korrespondierenden Internationalen Veröffentlichung WO 80/02607 wird bereits ein Verfahren zur partiellen elektronischen Retusche beschrieben, bei dem die digitalen Farbwerte unter Sichtkontrolle auf einem Farbmonitor bildpunktweise und partiell entsprechend den gewünschten Retuscheeffekten im Farbbild oder im Farbauszug durch bildpunktabhängige Korrekturwerte geändert werden. Die Bildpunkt-Koordinaten der zu retuschierenden Farbwerte und die gewünschte Retuschestärke werden mit Hilfe eines Koordinatenstiftes eines Koordinaten-Erfassungsgerätes bestimmt. Hierzu führt der Retuscheur den Koordinatenstift wie einen Retuschepinsel über den zu retuschierenden Bildteil, wobei der Koordinatenstift die entsprechenden Bildpunkte berührt und aus der Anzahl der Berührungen die Retuschestärke für die einzelnen Bildpunkte abgeleitet wird. Um grössere Bildteile schneller retuschieren zu können, wird die Anzahl der mit jeder Berührung des Koordinatenstiftes erfassten Bildpunkte innerhalb eines Bildpunkt-Bereichs vergrössert, was einer Vergrösserung der «Pinselfläche» entspricht.

Beim Ineinanderkopieren von Bildern mit scharfen Übergängen entsteht der subjektive Eindruck eines Reliefbildes, nämlich der Eindruck, dass die Bilder nicht ineinander-, sondern übereinanderkopiert wurden. Eine typische Retuschearbeit ist daher unter anderem das partielle Entschärfen, Abflachen oder Abschwächen solcher Konturen (Dichtesprünge).

Eine andere Retuschearbeit ist das partielle Angleichen, Nivellieren oder Glätten von unterschiedlichen Farb- bzw. Tonwerten eines Bildes.

Mit dem in dem genannten Patent angegebenen Retuscheverfahren können zwar Abflachungen und Angleichungen durchgeführt werden, es ist aber zeitaufwendig, insbesondere dann, wenn glatte Übergänge ohne erkennbare Dichtestufen erzielt werden sollen, da der Koordinatenstift in dicht beieinanderliegenden Bewegungen über den zu retuschierenden Bildteil geführt werden muss.

Aufgabe der vorliegenden Erfindung ist es daher, ein Verfahren zur partiell glättenden Retusche bei der elektronischen Farbbildreproduktion anzugeben, welches die bekannte Lösung dahingehend verbessert, dass insbesondere Abflachungen an Konturen und Farb- oder Tonwert-Angleichungen einfacher, genauer und in kürzerer Zeit durchzuführen sind.

Diese Aufgabe wird durch die im Anspruch 1 angegebenen Merkmale gelöst. Vorteilhafte Weiterbildungen sind in den Unteransprüchen angegeben.

Die Erfindung wird im folgenden anhand der Figuren 1 bis 13 näher erläutert.

Es zeigen:

Fig. 1 eine Schaltungsanordnung zur partiell glättenden Retusche bei der elektronischen Farbbildreproduktion;

Fig. 2 ein Flussdiagramm;

Fig. 3 verschiedene Formen von Wirkungsbereichen der Markiervorrichtung, im folgenden auch Pinselflächen genannt;

Fig. 4 eine grafische Darstellung zur Koordinaten-Bestimmung;

Fig. 5 eine Pinselfläche;

Fig. 6 eine grafische Darstellung zum Abflachen von Konturen;

Fig. 7 eine grafische Darstellung zum Glätten von Bildflächen;

Fig. 8 eine Pinselfläche unter Berücksichtigung einer Bildpunktumgebung;

Fig. 9 eine weitere Pinselfläche;

Fig. 10 eine grafische Darstellung zum Abflachen von Konturen;

Fig. 11 eine weitere grafische Darstellung;

Fig. 12 ein Ausführungsbeispiel einer Koordinaten-Erfassungseinrichtung;

Fig. 13 ein Ausführungsbeispiel eines Speichersteuerwerkes.

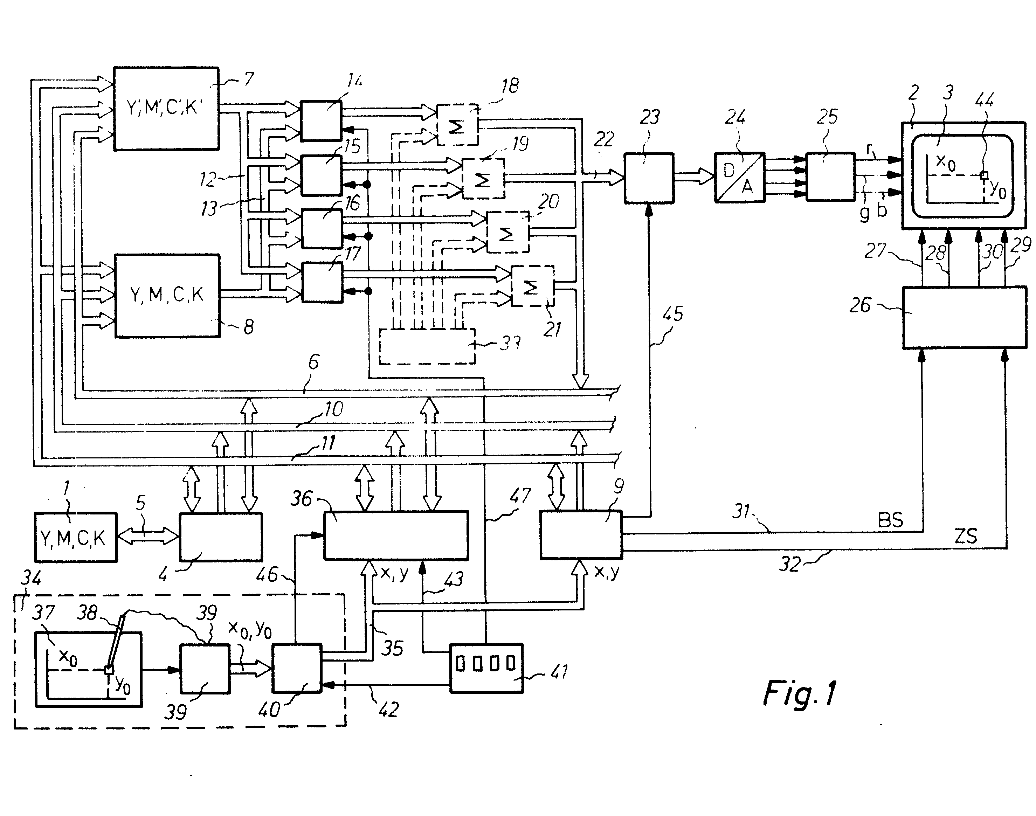

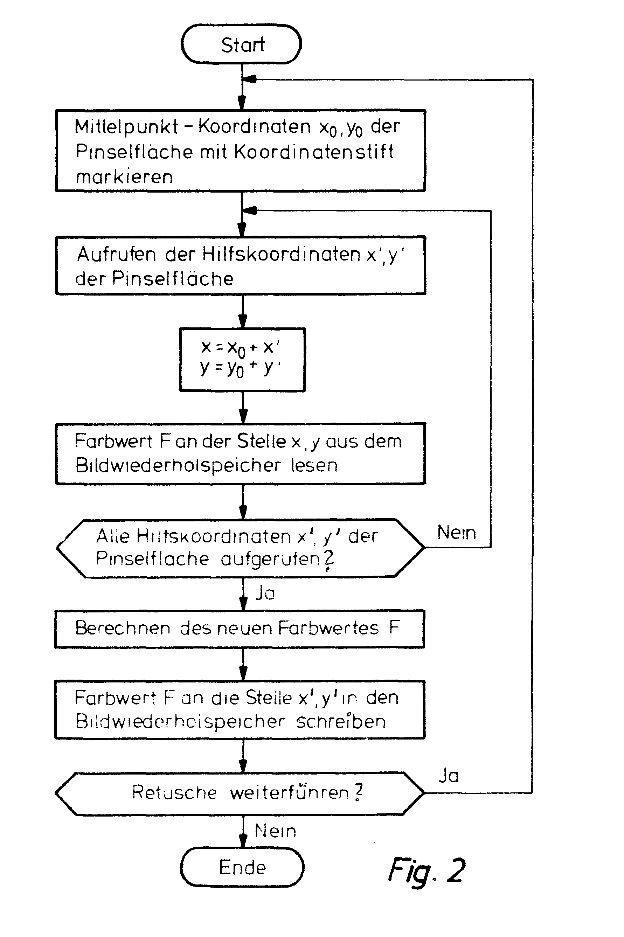

Figur 1 zeigt den prinzipiellen Aufbau einer Schaltungsanordnung zur partiell glättenden Retusche (Retuscheplatz) bei der elektronischen Farbbildreproduktion und Figur 2 ein Flussdiagramm zur Verdeutlichung des Verfahrensablaufes.

Ein Speichermedium 1 (Magnetband, Magnetplatte usw.) enthält im Ausführungsbeispiel die bereits in einem Farbscanner farbkorrigierten, digitalen Farbwerte Y, M, C und K für die Farbauszüge «Gelb» (Y), «Magenta» (M), «Cyan» (C) und «Schwarz» (K) eines zu reproduzierenden Bildes.

Die Farbwerte mögen beispielsweise eine Wortlänge von 8 Bit haben, so dass beispielsweise ausser «Schwarz» (0) und «Weiss» (255) noch 254 Graustufen unterschieden werden können. Das zu reproduzierende Bild kann sowohl ein Einzelbild als auch eine montierte Druckseite sein. Die Farbwerte eines Einzelbildes wurden zuvor in einem Farbscanner durch punkt- und zeilenweise trichromatische Abtastung einer Vorlage, durch Farbkorrektur und Analog-Digital-Wandlung der Farbauszugsignale gewonnen. Die Farbwerte einer ganzen Druckseite entstanden z.B. in einer Einrichtung zur elektronischen Seitenmontage nach der GB-A-1 407 487 (DE-A-2 161 038) durch Kombination der korrigierten Einzelbild-Farbwerte nach einem Layout-Plan. In dem Speichermedium 1 können aber auch unkorrigierte Farbwerte oder bereits nach der DE-A-2 920 058 retuschierte Farbwerte abgelegt sein.

Vor der Aufzeichnung der Farbauszüge auf Filmmaterial mittels eines Farbscanners (Offsetdruck) oder vor der Herstellung der Druckformen mittels einer Graviermaschine (Tiefdruck) sollen das Farbbild oder die Farbauszüge bzw. deren Farbwerte einer glättenden oder abflachenden Retusche unter Sichtkontrolle unterzogen werden.

Für die Sichtkontrolle ist ein Farbmonitor 2 vorhanden, auf dessen Bildschirm 3 ein Bild aus beispielsweise 512 × 512 Bildpunkten aufgezeichnet wird. Die zur Darstellung des Farbbildes oder eines zu retuschierenden Farbauszuges benötigten Farbwerte Y, M, C und K werden mittels eines Prozessrechners 4 aus dem gesamten Datenbestand des Speichermediums 1 ausgewählt oder berechnet und von dort Bildpunkt für Bildpunkt über Daten-Busse 5 und 6 in zwei Bildwiederholspeicher 7 und 8 übertragen. Die Bildwiederholspeicher 7 und 8 weisen dementsprechend jeweils eine Kapazität von 512 × 512 Speicherplätzen à 8 Bit für jeden Farbauszug auf.

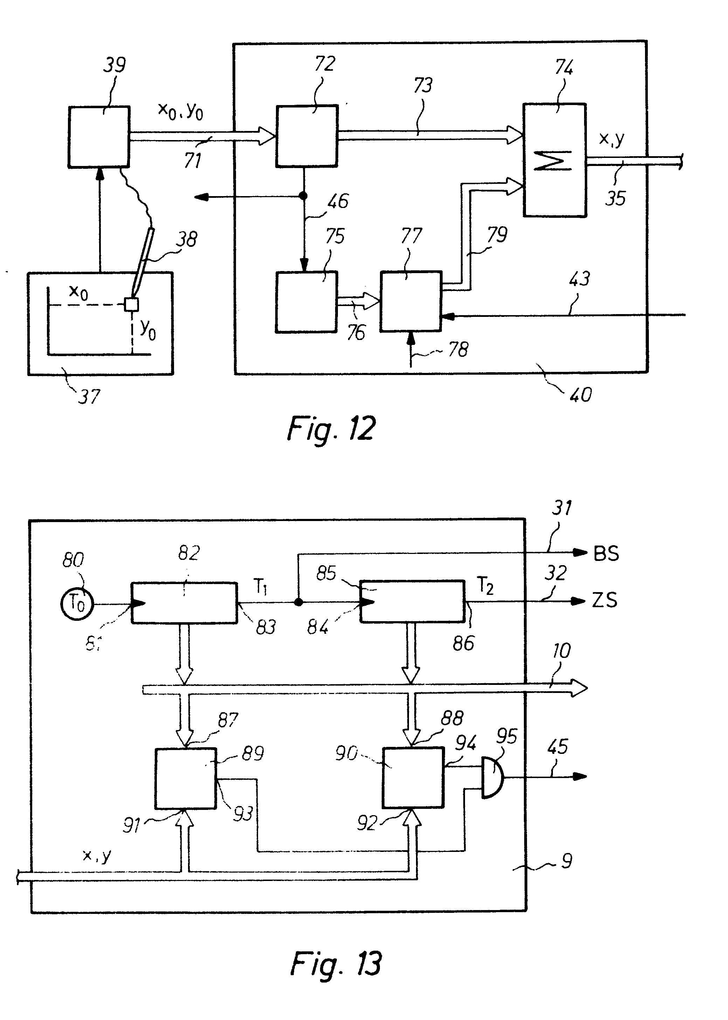

Zur Erzeugung eines Standbildes auf dem Bildschirm 3 des Farbmonitors 2 ruft ein Speichersteuerwerk 9 über einen Adress-Bus 10 die XY-Adressen der Bildwiederholspeicher 7 und 8 zyklisch auf. Figur 13 zeigt ein Ausführungsbeispiel für das Speichersteuerwerk 9. Die gespeicherten digitalen Farbwerte werden mit einem in dem Speichersteuerwerk 9 erzeugten Lesetakt auf einem Steuerungs-Bus 11 Zeile für Zeile und innerhalb einer Zeile Bildpunkt für Bildpunkt ausgelesen und über Daten-Busse 12 und 13 an Multiplexer 14, 15, 16 und 17 und Addierstufen 18, 19, 20 und 21 gegeben und von dort über einen Daten-Bus 22 und einen Lichtmarken-Generator 23 einem D/A-Wandler 24 zugeführt. Der D/A-Wandler 24 formt die digitalen Farbwerte in vier analoge Farbauszugsignale um. Ein nachgeschalteter Drucknachbildungs-Rechner 25 erzeugt aus den analogen Farbauszugsignalen drei Ansteuerungssignale r, g und b für den Farbmonitor 2, wobei der Drucknachbildungs-Rechner 25 dafür sorgt, dass das dargestellte Bild den farblichen Eindruck eines Mehrfarbendrucks vermittelt. Ein derartiger Drucknachbildungs-Rechner ist z.B. ausführlich in der GB-A-1 540 525 (DE-A-2 607 623) beschrieben.

Die Aufzeichnung auf dem Farbmonitor 2 erfolgt nach dem Zeilensprung-Verfahren, um ein flimmerfreies Bild zu erhalten. Ein Taktgenerator 26 erzeugt nach der beim Fernsehen üblichen Technik die zur Bildaufzeichnung benötigten Horizontal- und Vertikal-Ablenksignale auf Leitungen 27 und 28 und die Zeilenstart- und Bildstart-Impulse auf Leitungen 29 und 30. Das Speichersteuerwerk 9 liefert über Leitungen 31 und 32 Horizontal- und Vertikal-Synchronimpulse an den Taktgenerator 26, so dass die Bildaufzeichnung mit dem Lesen der Farbwerte aus den Bildwiederholspeichern 7 und 8 synchronisiert ist.

Die aus den Bildwiederholspeichern 7 und 8 ausgelesenen Farbwerte lassen sich in den Addierstufen 18 bis 21 durch bildpunktabhängige Korrekturwerte ändern, welche in einer Retusche-Schaltung 33 nach der DE-A-2 920 058 gebildet werden. Die retuschierten Farbwerte werden über den Daten-Bus 6 entweder in die Bildwiederholspeicher 7 oder 8 oder zusätzlich über den Daten-Bus 5 auf das Speichermedium 1 zurückgeschrieben. Die Retusche-Schaltung 33 ist nicht Gegenstand der vorliegenden Erfindung und wurde daher nur gestrichelt angedeutet. Für die im folgenden beschriebene Wirkungsweise der Schaltungsanordnung zum Glätten und Abflachen wird davon ausgegangen, dass die Korrekturwerte Null sind.

Für die glättende Retusche werden die Bildpunkt-Koordinaten x und y der Farbwerte Y, M, C und K der zu retuschierenden Bildteile in einem Koordinaten-Erfassungsgerät 34 ermittelt und über einen Adress-Bus 35 an eine Rechenschaltung 36 weitergeleitet.

Die Koordinaten-Erfassungseinrichtung 34 besteht aus einem Digitalisiertablett 37 mit einer Markiervorrichtung 38, die hier ein Koordinatenstift ist, aus einer Messstufe 39 und aus einem Koordinaten-Rechner 40. Ein Ausführungsbeispiel der Koordinaten-Erfassungseinrichtung 34 wird in Figur 12 gegeben.

Der Koordinatenstift 38 wird vom Retuscheur wie ein Retuschepinsel über den Teil des Digitalisiertabletts 37 geführt, der lagemässig mit den zu retuschierenden Bildteilen übereinstimmt. Während der Koordinatenstift 38 jeweils nur einen Bildpunkt mit den Koordinaten $x_0$ und $y_0$ markiert, werden im Koordinaten-Rechner 40 gleichzeitig die Bildpunkt-Koordinaten x und y mehrerer frei wählbarer Bildpunkte um den markierten Bildpunkt, nämlich der Bildpunkte des Wirkungsbereichs der Markiervorrichtung, berechnet. Die gleichzeitig innerhalb dieses Bildpunkt-Bereiches erfassten Bildpunkte bilden die Pinselfläche des Retuschepinsels, deren Form und Grösse durch die Anzahl und die Lage der erfassten Bildpunkte in bezug auf den mit dem Koordinatenstift 38 markierten Bildpunkt bestimmt wird.

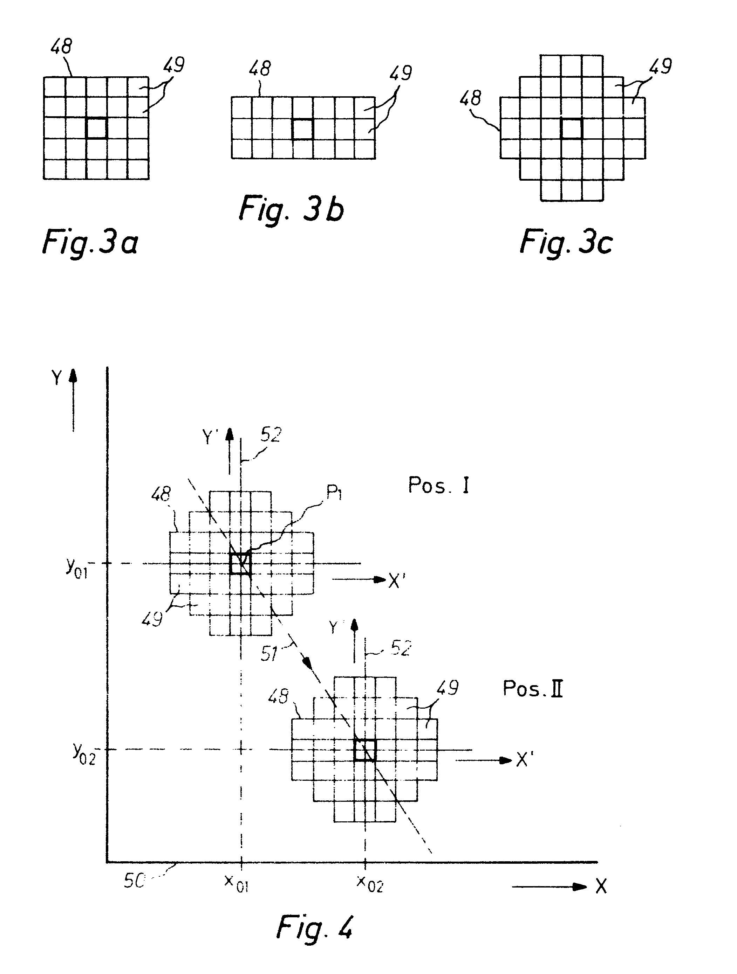

Von einer Eingabestufe 41 aus können über eine Steuerleitung 42 im Koordinaten-Rechner 40 Grösse und Form der Pinselfläche vorgegeben werden. Zur Erläuterung zeigt Figur 3 einige Formen von Pinselflächen und Figur 4 anhand einer grafischen Darstellung die Berechnung der Bildpunkt-Koordinaten x und y.

Während bei dem in der DE-A-2 920 058 angegebenen Retuscheverfahren jeweils alle innerhalb der Pinselfläche erfassten Farbwerte geändert werden, sollen im vorliegenden Verfahren zur glättenden Retusche lediglich die Farbwerte eines oder mehrerer auswählbarer Bildpunkte innerhalb der Pinselfläche in Abhängigkeit von den Farbwerten der anderen Punkte der Pinselfläche geändert werden. Durch die Auswahl der Bildpunkte, deren Farbwerte geändert werden sollen, werden innerhalb der Pinselfläche Korrekturzonen (auch Korrekturflächen genannt) abgegrenzt. Die Orientierung dieser Korrekturzonen innerhalb der Pinselfläche bestimmt die Wirkungsrichtung der Retusche. Die Wirkungsrichtung kann vom Retuscheur über eine Mehrfach-Steuerleitung 43 von der Eingabestufe 41 aus in der Rechenschaltung 36 ausgewählt werden. Die Wirkungsbreite einer Retusche wird durch die Korrekturzonen und/oder durch die Anzahl der nebeneinanderliegenden Pinselbewegungen bestimmt.

Beispiele für Farbwertänderungen innerhalb der Korrekturzonen werden später gegeben.

Zur Sichtbarmachung der Pinselfläche in dem zu retuschierenden Bildteil wird eine bewegliche Lichtmarke 44 in den Bildschirm 3 des Farbmonitors 2 eingeblendet, welche mit der Bewegung des Koordinatenstiftes 38 synchronisiert ist und welche die Grösse der Pinselfläche hat. Dazu werden die im Koordinaten-Rechner 40 ermittelten Bildpunkt-Koordinaten x und y über den Adress-Bus 35 auch gleichzeitig auf das Speichersteuerwerk 9 gegeben und dort mit den zyklisch aufgerufenen Adressen der Bildwiederholspeicher 7 und 8 verglichen. Bei Adressengleichheit entsteht ein Befehl «Lichtmarke», der über eine Steuerleitung 45 an den Lichtmarken-Generator 23 übermittelt wird. Der Befehl «Lichtmarke» erscheint genau in dem Zeitpunkt, in dem die Elektronenstrahlen des Farbmonitors 2 die gewünschte Position der Pinselfläche auf der Bildschirmfläche überstreichen. Der Befehl «Lichtmarke» aktiviert den Lichtmarken-Generator 23, der kurzzeitig gleiche Ansteuersignale für den Farbmonitor 2 erzeugt. Dadurch werden alle drei Elektronen-Erzeugungssysteme des Farbmonitors 2 gleichzeitig mit der maximal möglichen Leuchtdichte eingeschaltet, wodurch die «weisse» Lichtmarke 44 entsteht.

Im folgenden soll die Arbeitsweise der Schaltungsanordnung näher beschrieben werden.

Der Retuscheur bestimmt zunächst mit Hilfe einer Tastatur der Eingabestufe 41, ob die Retusche in einem oder mehreren Farbauszügen oder aber im Originalbild, d.h. in allen Farbauszügen, erfolgen soll. Ein Befehl «Farbauszug» von der Eingabestufe 41 über die Mehrfach-Steuerleitung 43 an die Rechenschaltung 36 wählt die Farbwerte Y, M, C oder K der entsprechenden Farbauszüge aus.

Der Retuscheur führt den Koordinatenstift 38 bzw. die Pinselfläche über die abzuflachende Kontur im Bild oder über denjenigen Bildteil, in dem die Farb- bzw. Tonwerte einander angeglichen werden sollen. Die Bewegung der Pinselfläche wird auf dem Farbmonitor 2 durch die Lichtmarke 44 angezeigt.

Die Koordinaten werden auf dem Digitalisiertablett 37 zunächst mit einer wesentlich höheren Auflösung erfasst als die Auflösung des gespeicherten und dargestellten Bildes aus $512 \times 512$ Bildpunkten, wodurch eine hohe Messgenauigkeit erzielt wird. In der Messstufe 39 werden dann die erfassten Koordinaten auf die möglichen $512 \times 512$ Bildpunkt-Koordinaten $x_0$ und $y_0$ bzw. Adressen der Bildwiederholspeicher 7 und 8 umgerechnet und an den Koordinaten-Rechner 40 weitergeleitet.

Im Koordinaten-Rechner 40 werden jeweils aus den durch den Koordinatenstift 38 markierten aktuellen Bildpunkt-Koordinaten $x_0$ und $y_0$ die zugehörigen Bildpunkt-Koordinaten x und y der Pinselfläche (des Wirkungsbereichs) ermittelt. Gleichzeitig werden laufend aufeinanderfolgende Paare von Bildpunkt-Koordinaten $x_0$ und $y_0$ miteinander verglichen. Bei einem Koordinatenwechsel, der bei jeder Verschiebung des Koordinatenstiftes 38 um einen Bildpunkt auftritt, liefert der Koordinaten-Rechner 40 einen Befehl «Koordinatenwechsel» auf einer Leitung 46 an die Rechenschaltung 36.

Der Koordinaten-Rechner 40 übermittelt die entsprechenden Bildpunkt-Koordinaten x und y der Pinselfläche in den einzelnen Positionen des Koordinatenstiftes 38 an die Rechenschaltung 36. Jeweils beim Befehl «Koordinatenwechsel» adressiert die Rechenschaltung 36 über den Adress-Bus 10 den Bildwiederholspeicher 7 mit den momentanen Bildpunkt-Koordinaten x und y. Die adressierten Farbwerte Y, M, C und K, die den ausgewählten Farbauszügen zugeordnet sind, werden vom Bildwiederholspeicher 7 über den Daten-Bus 6 in die Rechenschaltung 36 transferiert.

In der Rechenschaltung 36 werden dann die entsprechenden Farbwerte, die den Korrekturzonen (Korrekturflächen) der Pinselfläche zugeordnet sind, in Abhängigkeit von den Farbwerten der anderen Punkte der Pinselfläche geändert und über den Daten-Bus 6 wieder in den Bildwiederholspeicher 7 geladen, der somit die geänderten oder retuschierten Farbwerte Y', M', C' und K' enthält, während im Bildwiederholspeicher 8 die unretuschierten Farbwerte Y, M, C und K abgelegt sind.

Zur Beurteilung der Retusche wird das retuschierte Farbbild oder das unretuschierte Farbbild (Original) auf dem Farbmonitor 2 dargestellt. Dazu werden entweder die retuschierten Farbwerte Y', M', C' und K' des Bildwiederholspeichers 7 oder die unretuschierten Farbwerte Y, M, C und K des Bildwiederholspeichers 8 mit Hilfe der Multiplexer 14 bis 17 zu dem Farbmonitor 2 durchgeschaltet.

Der Retuscheur betätigt dazu eine entsprechende Taste in der Eingabestufe 41, wodurch ein Umschaltbefehl über eine Steuerleitung 47 an die Multiplexer 14 bis 17 gegeben wird.

Die Retusche kann rückgängig gemacht werden, indem die mit dem Koordinatenstift 38 adressierten Farbwerte Y', M', C' und K' im Bildwiederholspeicher 7 durch die ortsmässig zugeordneten, ungeänderten Farbwerte Y, M, C und K des Bildwiederholspeichers 8 mit Hilfe der Rechenschaltung 36 substituiert werden. Dazu wird eine Taste in der Eingabestufe 41 betätigt, wodurch ein Befehl «Rücknahme» über die Mehrfach-Steuerleitung 43 an die Rechenschaltung 36 gegeben wird.

Zur Erläuterung der zuvor beschriebenen Abläufe sind in Figur 3 zunächst einige Formen von Pinselflächen (Wirkungsbereichen) dargestellt.

Figur 3a zeigt eine quadratische Pinselfläche 48, die $5 \times 5$ Bildpunkte 49 umfasst, Figur 3b eine rechteckige Pinselfläche 48 mit $3 \times 7$ Bildpunkten 49 und Figur 3c eine der Kreisform angenäherte Pinselfläche 48. Die mit dem Koordinatenstift 38 markierten Bildpunkte P, im Ausführungsbeispiel jeweils die Mittelpunkte der Pinselflächen 48, sind in den Figuren 3a bis 3c durch starke Linien hervorgehoben.

Die Ermittlung der Bildpunkt-Koordinaten x und y wird anhand einer grafischen Darstellung in Figur 4 erläutert. Dort ist ein Ausschnitt aus dem Digitalisiertablett 37 der Koordinaten-Erfassungseinrichtung 34 bzw. aus dem zu retuschierenden Bildteil mit zwei Positionen I und II der Pinselfläche 48 in einem X/Y-Koordinatensystem 50 dargestellt. In der Position I hat die Pinselfläche 48 die Mittelpunkt-Koordinaten $x_{01}$ und $y_{01}$ und in der Position II die Mittelpunkt-Koordinaten $x_{02}$ und $y_{02}$, wobei es sich bei den Punkten $P_1$ und $P_2$ um die mit dem Koordinatenstift 38 markierten Punkte handelt. Die Position II wurde durch die Bewegung des Koordinatenstiftes 38 entlang einer gestrichelten Linie 51 erreicht. Der Pinselfläche 48 ist ein X'/Y'-Hilfskoordinatensystem 52 zugeordnet, das jeweils durch den Mittelpunkt P der Pinselfläche 48 verläuft. In dem X'/Y'-Hilfskoordinatensystem 52 sind die Hilfskoordinaten x' und y' derjenigen Bildpunkte festgelegt, die an der Bildung der Pinselfläche 48 in bezug auf Form und Grösse beteiligt sind. Die entsprechenden laufenden Bildpunkt-Koordinaten x und y ergeben sich jeweils für die einzelnen momentanen Positionen der Pinselfläche 48 im X/Y-Koordinatensystem 50 zu:

$$x = x_0 + x' \qquad (1)$$
$$y = y_0 + y'$$

Im folgenden werden einige Ausführungsformen für die Farbwert-Änderungen innerhalb der Korrekturzonen der Pinselfläche 48 anhand von Anwendungsbeispielen beschrieben.

In einer ersten Ausführungsform werden die Farbwerte, im weiteren Randwerte genannt, von mindestens zwei, vorzugsweise diametral gegenüberliegenden Bildpunkten an der Peripherie der Pinselfläche 48, im weiteren Randpunkte genannt, festgestellt, und die Farbwerte der auf der Verbindungslinie (Wirkungsrichtung) der Randpunkte liegenden Bildpunkte linear oder nach einer vorgegebenen Funktion an die Randwerte angeglichen.

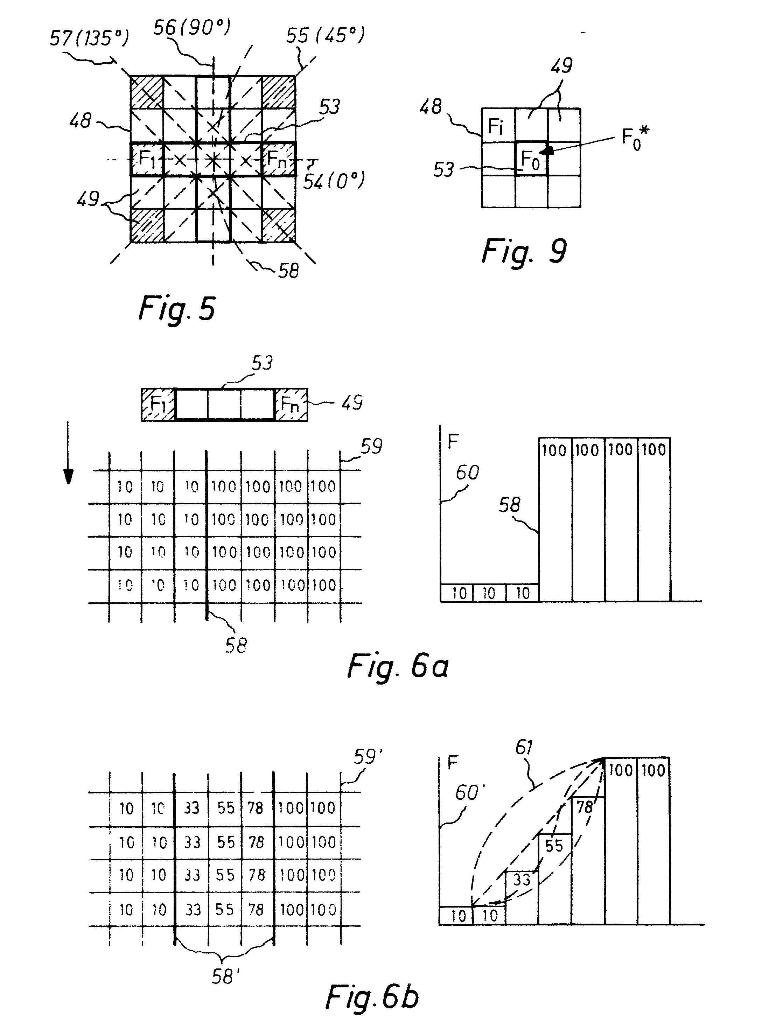

Figur 5 zeigt beispielsweise eine quadratische Pinselfläche 48, die $n \times n$ Bildpunkte 49 ($n = 5$) bzw. $n \times n$ Farbwerte Y, M, C oder K, im folgenden zusammenfassend mit F bezeichnet, umfasst. Innerhalb der Pinselfläche 48 sind ausserdem vier ausgewählte Korrekturzonen (Korrekturflächen) 53 dargestellt, die jeweils ein Randpunkt-Paar mit den Farbwerten $F_1$ und $F_n$ aufweisen. Die Korrekturzonen 53 liegen auf vier gegeneinander gedrehten Linien 54 ($0°$), 55 ($45°$), 56 ($90°$) und 57 ($135°$), welche vier unterschiedliche Wirkungsrichtungen für eine Farbwert-Änderung innerhalb der Pinselfläche 48 repräsentieren. Im gezeigten Beispiel ist eine Korrekturzone 53 somit einen Bildpunkt breit und $i = (n-2)$ Bildpunkte lang, da die Randwerte $F_1$ und $F_n$ selbst nicht geändert werden sollen. Die Länge einer Korrekturzone 53 kann durch die Grösse der Pinselfläche 48 variiert werden.

Im gewählten Beispiel erfolgt die Änderung der Farbwerte $F_i$ der Bildpunkte $i = 2$ bis $i = (n-1)$ innerhalb jeder Korrekturzone 53 zwischen den Randwerten $F_1$ und $F_n$ durch lineare Interpolation nach der Gleichung:

$$F_i = \frac{(n-i)\, F_1 + (i-1)\, F_n}{(n-1)} \qquad (2)$$

Selbstverständlich können die Farbwerte $F_i$ auch nach einer vorgegebenen Funktion verzerrt werden.

Wenn bei der Abflachung einer Kontur der Koordinatenstift 38 bzw. die Pinselfläche 48 entlang dieser Kontur bewegt wird, sollte die Wirkungsrichtung immer näherungsweise senkrecht zur Kontur verlaufen, um die jeweils günstige Korrekturwirkung zu erzielen. Dies kann z.B. durch Auswahl der entsprechenden Wirkungsrichtung der Korrekturzonen durch den Retuscheur oder durch eine automatische Konturenerkennung innerhalb der Pinselfläche 48 erfolgen. Bei dem in Figur 5 durch eine gestrichelte Linie angedeuteten Verlauf einer Kontur 58 würde in der gezeigten Position der Pinselfläche 48 die Korrekturzone 53 in Richtung der Linie 54 ausgewählt. Selbstverständlich können auch alle Korrekturzonen 53 der Pinselfläche 48 gleichzeitig wirksam sein.

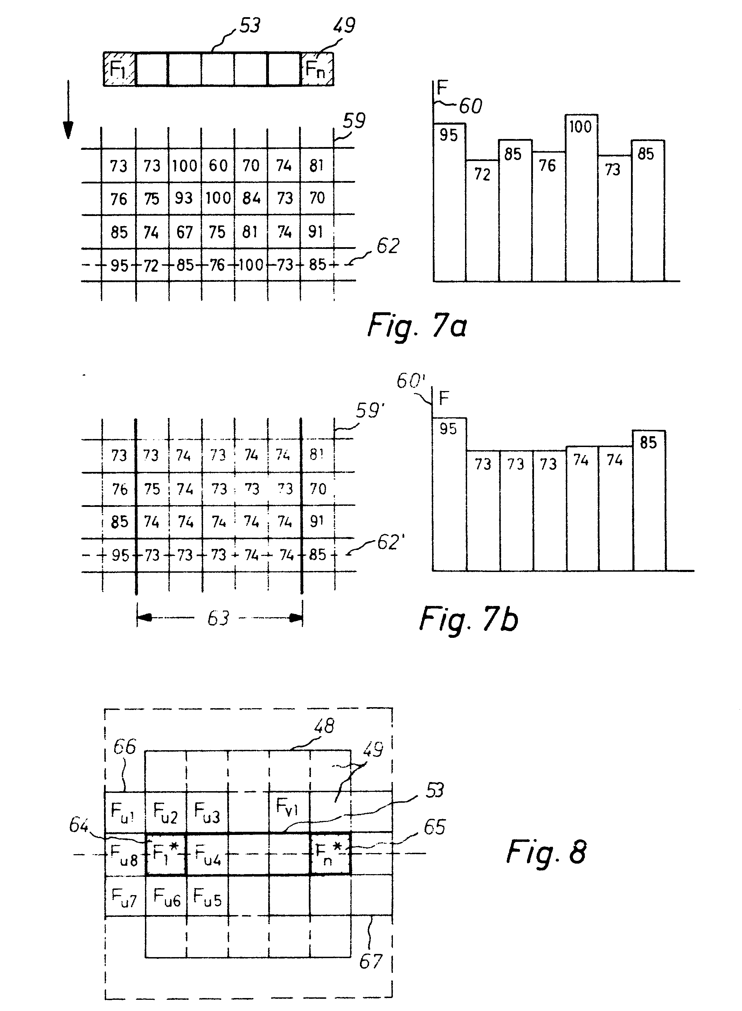

Als Anwendungsbeispiele für die erste Verfahrensform gemäss Figur 5 werden das Abflachen von Konturen (Figur 6) und das Glätten von Bildflächen (Figur 7) beschrieben.

Figur 6 zeigt zunächst die Abflachung einer Kontur anhand einer weiteren grafischen Darstellung.

In Figur 6a ist ein Bildausschnitt 59 aus einem zu retuschierenden Bild dargestellt, in dem jedem Quadrat ein Bildpunkt 49 und der eingetragene Wert dem zugehörigen Farbwert F entspricht. Entlang der Kontur 58 treten grosse Farbwertänderungen auf. Über dem Bildausschnitt 59 ist eine Korrekturzone 53 der Pinselfläche 48 angedeutet, deren Wirkungsrichtung senkrecht zur Kontur 58 verläuft und die zur Abflachung der Kontur 58 in Richtung des Pfeiles über den Bildausschnitt 59 bewegt wird. Die Korrekturzone 53 erfasst drei nebeneinanderliegende Bildpunkte 49.

Neben dem Bildausschnitt 59 ist das Farbwert-Profil 60 senkrecht zur Kontur 58 dargestellt.

Das Abflachen der Kontur 58 erfolgt durch Bewegung der Pinselfläche 48 bzw. der Korrekturzone 53 entlang der Kontur 58.

Das Ergebnis der Abflachung ist in Figur 6b dargestellt.

Der Bildausschnitt 59′ zeigt die geänderten Farbwerte innerhalb der Korrekturzone 53 der Pinselfläche 48 und das entsprechende Farbwert-Profil 60′ der abgeflachten Kontur 58′, welche die Breite der Korrekturzone 53 hat. Der Fall, dass die Farbwerte zwischen den Randwerten nach einer vorgegebenen Funktion verzerrt werden, ist in dem Farbwert-Profil 60′ durch eine gestrichelte Linie 61 angedeutet.

Figur 7 zeigt als Anwendungsbeispiel für die erste Verfahrensform das partielle Angleichen unterschiedlicher Farbwerte (Glätten von verrauschten Flächen) gemäss Gleichung (2).

In Figur 7a ist wiederum ein Bildausschnitt 59 mit unterschiedlichen Farbwerten F dargestellt, die einander angeglichen werden sollen.

Neben dem Bildausschnitt 59 ist das Farbwert-Profil 60 entlang einer Linie 62 des Bildausschnitts 59 gezeigt. Oberhalb des Bildausschnitts 59 ist wiederum eine Korrekturzone 53 der Pinselfläche 48 angedeutet, die fünf Bildpunkte 49 umfasst. Zur Glättung der Fläche wird die Korrekturzone 53 in Richtung des Pfeiles über den Bildausschnitt 59 bewegt.

Figur 7b zeigt das Ergebnis der Angleichung. Innerhalb der Wirkungsbreite der Korrekturzone 53, durch die Linien 63 angedeutet, wurden die Farbwerte F gemäss Gleichung (2) einander angeglichen, wie dies aus dem Bildausschnitt 59′ und dem zugehörigen Farbwert-Profil 60′ hervorgeht.

Bei den in den Figuren 6 und 7 beschriebenen Anwendungsbeispielen werden die von der Korrekturzone erfassten Farbwerte durch einmaliges Überstreichen mit dem Retuschepinsel geändert. Mehrmaliges Überstreichen desselben Bildbereichs erbringt keine weiteren Farbwert-Änderungen. Die Wirkungsbreite dagegen kann durch Vergrösserung der Korrekturzone und/oder durch wiederholte nebeneinanderliegende Pinselbewegungen erweitert werden.

Es kann vorkommen, dass z.B. durch Filmkorn, Rauschen oder durch Lichtreflexe in dem zu retuschierenden Bildteil ein Randwert amplitudenmässig extrem von den Farbwerten der den Randpunkt umgebenden Bildpunkte abweicht, was bei der Interpolation gemäss Gleichung (2) zu Fehlern führen würde. In diesem Falle erweist es sich als besonders vorteilhaft, bei der Interpolation nicht von den Randwerten $F_1$ und $F_n$ selbst auszugehen, sondern die Ausgangswerte $F^*_1$ und $F^*_n$ für die Interpolationsrechnung durch Mittelwertbildung aus den Farbwerten $F_{ui}$ bzw. $F_{vi}$ der die Randpunkte umgebenden Bildpunkte zu ermitteln.

Figur 8 zeigt hierzu wiederum die Pinselfläche 48 aus $n \times n$ Bildpunkten 49 ($n = 5$) und eine Korrekturzone 53 mit den Randpunkten 64 und 65 und deren Randpunkt-Umgebung 66 und 67 aus jeweils m Bildpunkten 49 ($m = 8$).

Die gemittelten Ausgangswerte $F^*_1$ und $F^*_n$ ergeben sich dann zu:

$$F^*_1 = \frac{1}{m+1}\left[\sum_{i=1}^{m} F_{ui} + F_1\right]$$

$$\tag{3}$$

$$F^*_n = \frac{1}{m+1}\left[\sum_{i=1}^{m} F_{vi} + F_n\right]$$

In diesem Falle erfolgt die Interpolationsrechnung nach der Gleichung (4).

$$F_i = \frac{(n-1)\,F^*_1 + (i-1)F^*_n}{(n-1)} \tag{4}$$

In vorteilhafter Weise kann die Länge einer Korrekturzone 53 von $(n-2)$ auf n Bildpunkte erweitert werden, wenn die ursprünglichen Randpunkte $F_1$ und $F_n$ durch die entsprechenden Mittelwerte $F^*_1$ und $F^*_n$ ersetzt werden.

In einer zweiten Ausführungsform werden die Farbwerte der innerhalb einer Korrekturzone 53 liegenden Bildpunkte durch einen aus den Farbwerten $F_i$ der von der Pinselfläche 48 erfassten Bildpunkte berechneten Farbwert $F^*_0$ beispielsweise durch den Mittelwert, ersetzt.

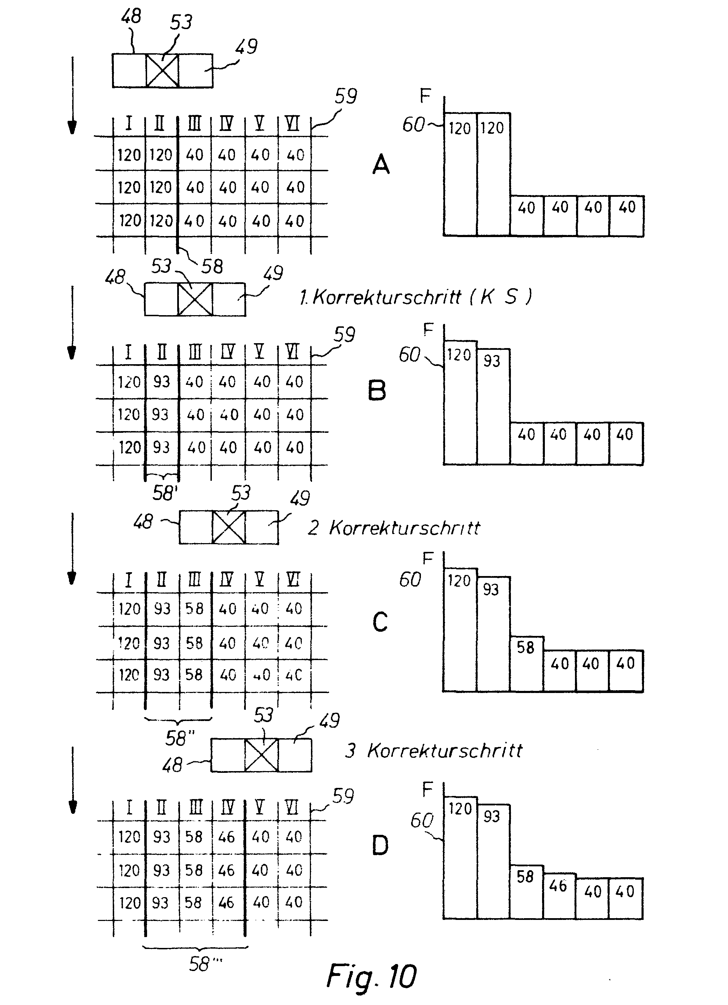

Figur 9 zeigt z.B. eine quadratische Pinselfläche 48 aus p Bildpunkten 49 ($p = 9$). Die Korrekturzone 53 besteht hier aus einem Bildpunkt mit dem Farbwert $F_0$ im zentralen Bereich der Pinselfläche 48. Dieser Farbwert $F_0$ wird durch einen Farbwert $F^*_0$ ersetzt, der nach Gleichung (5) aus den Farbwerten $F_i$ und $F_0$ aller Bildpunkte der Pinselfläche 48 berechnet wird.

$$F^*_0 = \sum_{i=1}^{p} a_i F_i + a_0 F_0 \tag{5}$$

In Gleichung (5) sind $a_i$ und $a_0$ Bewertungsfaktoren, für welche die Nebenbedingung $a_i + a_0 = 1$ gilt. Die Bewertungsfaktoren können den prozentualen Anteil der Farbwerte vorgeben oder aber den räumlichen Abstand der Bildpunkte zueinander berücksichtigen.

Zur Vereinfachung soll der zu substituierende Farbwert $F^*_0$ durch eine gleichgewichtete Mittelwertbildung berechnet werden. In diesem Fall ist $a_i = a_0 = 1/p$, und die Gleichung (5) vereinfacht sich zu:

$$F^*_0 = \frac{1}{p}\cdot\sum_{i=1}^{p} F_i + F_0 \tag{6}$$

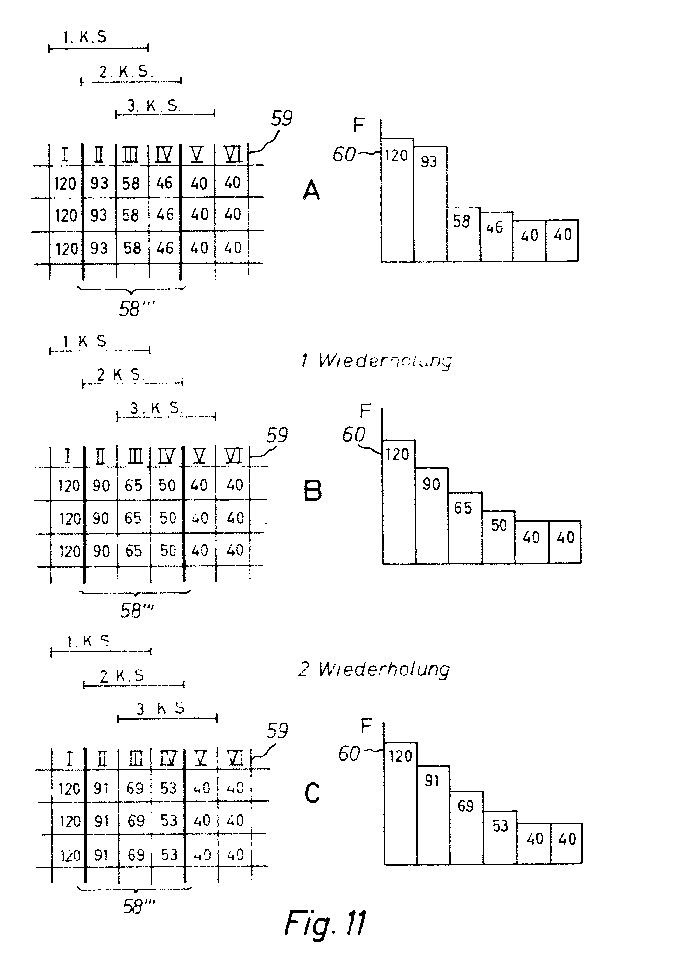

Ein Anwendungsbeispiel für die zweite Anwendungsform gemäss Gleichung (5) oder (6) ist wiederum das Abflachen von Konturen (Figur 10 und 11).

Zur Erläuterung einer Konturenabflachung zeigen die Figuren 10 und 11 wiederum Bildausschnitte 59 aus dem zu retuschierenden Bild während der Retusche und die zugehörigen Farbwert-Profile 60.

Über den Bildausschnitten 59 ist jeweils eine Pinselfläche 48 aus drei Bildpunkten 49 mit einer zentralen, aus einem Bildpunkt bestehenden Korrekturzone 53 in verschiedene Positionen während der einzelnen Korrekturschritte (K.S.) angedeutet. Der Farbwert $F_0$ der Korrekturzone 53 wird durch den aus den Farbwerten der drei Bildpunkte gebildeten Mittelwert $F_0^*$ ersetzt.

In Figur 10 zeigt Diagramm (A) den unretuschierten Bildausschnitt 59 mit einer scharfen Kontur 58, wie es aus den eingetragenen Farbwerten und dem Farbwert-Profil 60 ersichtlich ist. Zur Abflachung der scharfen Kontur 58 führt der Retuscheur die Korrekturzone 53 der Pinselfläche 48 in mehreren Korrekturschritten in Richtung des Pfeiles über den zu retuschierenden Bildausschnitt 59 und versetzt die Pinselfläche bzw. die Korrekturzone 53 jeweils nach einem Korrekturschritt senkrecht zu den Pfeilen um einen Bildpunkt. Die nach den einzelnen Korrekturschritten erreichten Farbwert-Änderungen sind aus den Diagrammen (B) bis (D) ersichtlich. Nach drei Korrekturschritten ist die scharfe Kontur 58 – Diagramm (A) – auf einen drei Bildpunkte breiten Bereich 58' abgeflacht worden. Durch ergänzende Korrekturschritte nach links und rechts lässt sich der Bereich 58' weiter verbreitern.

Treten innerhalb des Bereiches 58' noch zu grosse Farbwert-Sprünge auf, können die Korrekturschritte innerhalb des Bereiches 58' beliebig oft wiederholt werden, um einen möglichst linearen Übergang zu erhalten, wie dies in Figur 11 dargestellt ist.

Figur 11, Diagramm (A), zeigt einen Bildausschnitt 59 mit einer Farbwert-Verteilung, die mit der Farbwert-Verteilung in Figur 10, Diagramm (D), identisch ist. Die Diagramme (B) und (C) zeigen die Ergebnisse nach zwei Wiederholungen der in Figur 10 durchgeführten Korrekturschritte (K.S.), wobei jede Wiederholung aus drei Korrekturschritten besteht. Aus Figur 11, Diagramm (C) ist ersichtlich, dass innerhalb des Bereiches 58' eine Linearisierung der Farbwerte stattgefunden hat.

Die zweite Ausführungsform kann selbstverständlich auch zum Glätten von verrauschten Bildflächen angewendet werden, wie dies in Figur 7 erläutert wurde.

Figur 12 zeigt ein Ausführungsbeispiel für die Koordinaten-Erfassungseinrichtung 34 nach Figur 1.

Die Mittelpunkte P der Pinselfläche 48 (Figur 4) werden mit dem Koordinatenstift 38 auf dem Digitalisiertablett 37 markiert, und die Messstufen 39 übermittelt die erfassten Bildpunkt-Koordinaten $x_0$ und $y_0$ über einen Daten-Bus 71, eine Vergleichsstufe 72 und über einen weiteren Daten-Bus 73 an eine Addierstufe 74. In der Vergleichsstufe 72 werden laufend aufeinanderfolgende Paare von Mittelpunkt-Koordinaten $x_0$ und $y_0$ miteinander verglichen. Bei einem Koordinatenwechsel, der bei einer Verschiebung des Koordinatenstiftes 38 auftritt, liefert die Vergleichsstufe 72 den Befehl «Koordinatenwechsel» auf der Leitung 46 an einen Adresszähler 75. Der Adresszähler 75, jeweils von dem Befehl «Koordinatenwechsel» gestartet, ruft zyklisch und zeilenweise alle möglichen Koordinaten des X'/Y'-Hilfskoordinatensystems 52 auf, die über einen Daten-Bus 76, einer Rechenstufe 77 zugeführt werden. Die Rechenstufe 77 ist über einen Programmier-Eingang 78 mit den Parametern der gewünschten Pinselfläche 48 nach einer der Figuren 3a bis 3c programmiert. Die vom Adresszähler 75 aufgerufenen Koordinaten werden in der Rechenstufe 77 daraufhin untersucht, ob sie in die Pinselfläche 48 fallen. Ist dies der Fall, handelt es sich bei den aufgerufenen Koordinaten um Hilfskoordinaten x' und y' der Pinselfläche 48. Die Hilfskoordinaten x' und y' werden über einen Daten-Bus 79 an die Addierstufe 74 gegeben, in der gemäss Gleichung (1) die Bildpunkt-Koordinaten x und y gebildet werden. Die Bildpunkt-Koordinaten x und y gelangen über den Daten-Bus 35 an die Rechenschaltung 36 und das Adresssteuerwerk 9 der Schaltungsanordnung nach Figur 1.

Figur 13 zeigt ein Ausführungsbeispiel des Speichersteuerwerks 9 nach Figur 1.

Das Speichersteuerwerk 9 enthält einen Taktgenerator 80, welcher eine Zähltaktfolge $T_0$ über einen Zähleingang 81 in einen X-Adresszähler 82 einzählt. Der X-Adresszähler 82 ist ein 9-Bit-Binärzähler und ruft über den Adress-Bus 10 die X-Adressen von 0 bis 511 der Bildwiederholspeicher 7 und 8 auf. Jeweils nach 511 gezählten Takten erscheint am Ausgang des X-Adresszählers 82 ein Takt $T_1$, der über einen Zähleingang 84 in einen Y-Adresszähler 85 eingezählt wird. Der Y-Adresszähler 85 ist ebenfalls ein 9-Bit-Binärzähler und ruft die entsprechenden Y-Adressen von 0 bis 511 der Bildwiederholspeicher 7 und 8 über den Adress-Bus 10 auf. Der Y-Adresszähler 85 erzeugt an seinem Ausgang 86 ebenfalls nach 511 eingezählten Takten einen Takt $T_2$. Aus den Takten $T_1$ und $T_2$ werden die Zeilenstart-Impulse (ZS) und die Bildstart-Impulse (BS) auf den Leitungen 31 und 32 für die Bildaufzeichnung abgeleitet.

Der X-Adresszähler 82 und der Y-Adresszähler 85 stehen über den Adress-Bus 10 mit den ersten Vergleichseingängen 87 und 88 von Vergleicher 89 und 90 in Verbindung. Die zweiten Vergleichseingänge 91 und 92 der Vergleicher 89 und 90 sind mit den Bildpunkt-Koordinaten x und y beaufschlagt, die vom Koordinaten-Rechner 40 über den Daten-Bus 35 geliefert werden. Die Signalausgänge 93 und 94 der Vergleicher 89 und 90 sind über ein Und-Tor 95 miteinander verknüpft. Bei Gleichheit der Adressen erscheint auf der Leitung 45 das Signal «Lichtmarke», mit dem die Bewegung der Lichtmarke 44 auf dem Bildschirm 3 mit der Bewegung des Koordinatenstiftes 38 des Koordinaten-Erfassungsgerätes 34 synchronisiert wird.

Die Erfindung wird mit Vorteil auf dem gesamten Gebiet der elektronischen Reproduktionstechnik angewendet, insbesondere auf dem Gebiet der Farbbildreproduktion, mittels elektronischer Farbscanner und Bildverarbeitungssysteme zur Herstellung von retuschierten und korrigierten Druckformen in Form von Farbauszügen oder Druckzylindern.

## Patentansprüche

1. Verfahren zur partiell glättenden elektronischen Retusche von Konturen und verrauschten Flächen bei der Farbbildreproduktion, bei dem die durch bildpunktweise und trichromatische Vorlagenabtastung erzeugten Farbsignale digitalisiert und die digitalen Farbwerte der einzelnen Farbkomponenten in einem Speichermedium abgelegt werden, bei dem beim Positionieren der Markiervorrichtung eines Koordinaten-Erfassungsgerätes auf eine zu glättende Stelle gleichzeitig die Ortskoordinaten-Paare mehrerer Bildpunkte innerhalb eines um die markierte Stelle liegenden Bildpunkt-Bereiches, des Wirkungsbereiches der Markiervorrichtung, erfasst werden und die Farbwerte von in diesen Wirkungsbereich fallenden Bildpunkten in Abhängigkeit von anderen Farbwerten unter Sichtkontrolle geändert werden, und bei dem die Markiervorrichtung und mit ihr der Wirkungsbereich, über die zu glättenden Bereiche des Bildes bewegt wird, dadurch gekennzeichnet, dass

a) innerhalb des Wirkungsbereiches der Markiervorrichtung und relativ zu diesem mindestens eine einen Teilbereich des Wirkungsbereiches bildende Korrekturfläche festgelegt wird,

b) nur die Farbwerte der in die Korrekturfläche(n) fallenden Bildpunkte durch entsprechende neue Farbwerte ersetzt werden, welche aus aufgerufenen Farbwerten des Wirkungsbereiches im Sinne einer Glättung von dort vorhandenen Konturen und verrauschten Flächen ermittelt werden, so dass die Grösse der festgelegten Korrekturfläche(n) den gleichzeitig geglätteten Bildbereich bestimmt und

c) die Markiervorrichtung im Falle einer zu glättenden Kontur entlang dieser bewegt wird.

2. Verfahren nach Anspruch 1, dadurch gekennzeichnet, dass in dem Wirkungsbereich mehrere Korrekturflächen liegen, deren Ausdehnungen jeweils in einer Richtung grösser als in der anderen Richtung sind, und zwar so, dass ihre Zentren im Zentrum des Wirkungsbereiches liegen und die Korrekturflächen gegeneinander um das Zentrum des Wirkungsbereiches gedreht sind.

3. Verfahren nach Anspruch 2, dadurch gekennzeichnet, dass die Wirkungsrichtung der Retusche innerhalb des Wirkungsbereiches durch Auswahl der entsprechenden Korrekturfläche bestimmt wird.

4. Verfahren nach Anspruch 3, dadurch gekennzeichnet, dass der Verlauf einer zu glättenden Kontur aus den Farbwerten des Wirkungsbereiches ermittelt wird und dass die Auswahl der entsprechenden Korrekturflächen durch den ermittelten Verlauf der Kontur gesteuert wird.

5. Verfahren nach einem der Ansprüche 1 bis 4, dadurch gekennzeichnet, dass für die sich jeweils an eine Korrekturfläche in Wirkungsrichtung anschliessenden Rand-Bildpunkte Ausgangswerte ermittelt werden und dass die Farbwerte $(F_i)$ der Bildpunkte der Korrekturfläche aus den Ausgangswerten berechnet werden.

6. Verfahren nach Anspruch 5, dadurch gekennzeichnet, dass die Ausgangswerte $(F_1; F_n)$ den Farbwerten der Rand-Bildpunkte entsprechen.

7. Verfahren nach Anspruch 5, dadurch gekennzeichnet, dass die Ausgangswerte $(F^*_1; F^*_n)$ jeweils dem Mittelwert entsprechen, der aus den Farbwerten $(F_{ui}; F_{vi})$ der die Rand-Bildpunkte umgebenden Bildpunkte innerhalb des Wirkungsbereiches berechnet wird.

8. Verfahren nach einem der Ansprüche 5 bis 7, dadurch gekennzeichnet, dass die geänderten Farbwerte $(F_i)$ durch Interpolation, insbesondere durch lineare Interpolation, zwischen den Ausgangswerten ermittelt werden.

9. Verfahren nach einem der Ansprüche 5 bis 7, dadurch gekennzeichnet, dass die Farbwerte $(F_i)$ nach einer vorgegebenen Funktion berechnet werden.

10. Verfahren nach einem der Ansprüche 7 bis 9, dadurch gekennzeichnet, dass die Farbwerte $(F_1; F_n)$ der Rand-Bildpunkte durch die berechneten Mittelwerte ersetzt werden, um den Wirkungsbereich zu vergrössern.

11. Verfahren nach Anspruch 1, dadurch gekennzeichnet, dass der Wirkungsbereich nur eine Korrekturfläche aufweist und dass alle Farbwerte der Korrekturfläche durch einen aus den Farbwerten des Wirkungsbereiches, insbesondere durch eine gleichgewichtete Mittelwert-Bildung, berechneten Farbwert $(F^*_o)$ ersetzt werden.

12. Verfahren nach einem der Ansprüche 1 bis 11, dadurch gekennzeichnet, dass die Markiervorrichtung ein Koordinatenstift ist.

13. Verfahren nach Anspruch 12, dadurch gekennzeichnet, dass das retuschierte oder unretuschierte Farbbild (Original) bzw. ein retuschierter oder unretuschierter Farbauszug zur Sichtkontrolle auf einem Farbmonitor dargestellt wird, dass in den Bildschirm des Monitors eine den Wirkungsbereich markierende verschiebbare Lichtmarke eingeblendet wird, und dass die Bewegung der Lichtmarke mit der Bewegung des Koordinatenstiftes des Koordinaten-Erfassungsgerätes synchronisiert wird.

14. Verfahren nach einem der Ansprüche 1 bis 13, dadurch gekennzeichnet, dass eine anfängliche Retusche durch Substitution der geänderten Farbwerte durch die ursprünglichen Farbwerte rückgängig gemacht wird.

## Claims

1. Process for the partially smoothing electronic retouching of outlines and noise-infested areas during colour image reproduction, in which the colour signals generated by scanning an original image dot by image dot and in trichromatic manner are digitalised and the digital colour values of the separate colour components are stored in a storage medium, wherein at the time of placing the marking device of a co-ordinate detector instrument on a point which is to be smoothed, the locus co-ordinate pairs of several image dots present within an image dot area extending around the point marked, being the effective range of the marking device, are detected at the same time and the colour values of image dots lying within this effective range are modified under visual verification as a function of other colour values, and wherein the marking device and the effective range with it, is moved over the image areas which are to be smoothed, characterised in that

a) at least one correction area forming a partial range of the effective range is determined within the effective range of the marking device and with respect to the same,

b) only the colour values of the image dots lying in the correction area(s) are replaced by corresponding new colour values which are determined from addressed colour values of the effective range for the purpose of smoothing outlines and noise-infested areas present thereat, so that the size of the specified correction area(s) determines the image area smoothed at the same time, and

c) the marking device its moved along an outline which is to be smoothed.

2. Process according to claim 1, characterised in that in the effective range are several correction areas whose extensions are greater in each case in one direction than in the other direction, that is to say so that their centres lie at the centre of the effective range and the correction areas are rotated with respect to each other around the centre of the effective range.

3. Process according to claim 2, characterised in that the direction of action of the retouching operation within the effective range is determined by selection of the appropriate correction area.

4. Process according to claim 3, characterised in that the path of an outline which is to be smoothed is determined from the colour values of the effective range and that the selection of the corresponding correction areas is controlled by the determined path of the outline.

5. Process according to one of the claims 1 to 4, characterised in that initial values are determined for the marginal image dots joined in each case to a correction area in the direction of action and that the colour values ($F_i$) of the image dots of the correction area are calculated from the initial values.

6. Process according to claim 5, characterised in that the initial values ($F_1$; $F_n$) correspond to the colour values of the marginal image dots.

7. Process according to claim 5, characterised in that the initial values ($F^*_1$; $F^*_n$) correspond in each case to the mean value which is calculated from the colour values ($F_{ui}$; $F_{vi}$) of the image dots surrounding the marginal image dots within the effective range.

8. Process according to one of the claims 5 to 7, characterised in that the modified colour values ($F_i$) are determined by interpolation, in particular by linear interpolation between the initial values.

9. Process according to one of the claims 5 to 7, characterised in that the colour values ($F_i$) are calculated in accordance with the predetermined function.

10. Process according to one of the claims 7 to 9, characterised in that the colour values ($F_1$; $F_n$) of the marginal image dots are replaced by the calculated mean values to increase the effective range.

11. Process according to claim 1, characterised in that the effective range comprises one correction area only and that all the colour values of the correction area are replaced by one colour value ($F^*_0$) calculated from the colour values of the effective range, in particular by a compensated mean value determination.

12. Process according to one of the claims 1 to 11, characterised in that the marking device is a co-ordinate pen.

13. Process according to claim 12, characterised in that the retouched or unretouched colour image (original) or a retouched or unretouched colour separation is depicted on a colour monitor for visual verification, that a displaceable light mark indicating the effective range is gated into the image screen of the monitor, and that the displacement of the light mark is synchronised with the displacement of the co-ordinate pen of the co-ordinate detector instrument.

14. Process according to one of the claims 1 to 13, characterised in that an initial retouching operation is cancelled by replacing the modified colour values by the original colour values.

**Revendications**

1. Procédé pour permettre des retouches électroniques de lissage partiel de contours et de surfaces grenues dans la reproduction d'images en couleurs, procédé dans lequel les signaux de couleurs obtenus par balayage trichromatique et par points d'un modèle sont mis sous forme numérique et les valeurs chromatiques numériques des différentes composantes de couleurs sont déposées sur un support d'enregistrement, procédé dans lequel lors du positionnement du dispositif de marquage d'un appareil de détection de coordonnées sur un emplacement à lisser, on détecte simultanément les paires de coordonnées de lieu de plusieurs points d'image à l'intérieur d'une zone de points d'image se situant autour des emplacements marqués de la zone d'action du dispositif de marquage, et les valeurs chromatiques des points d'image se trouvant dans cette zone d'action sont modifiées sous contrôle visuel en fonction d'autres valeurs chromatiques, et dans lequel le dispositif de marquage et avec lui la zone d'action, sont déplacés au-dessus de la zone de l'image à lisser, procédé caractérisé en ce que:

a) à l'intérieur de la zone d'action du dispositif de marquage et relativement par rapport à celui-ci, au moins une surface de correction constituant une zone partielle de la zone d'action est déterminée,

b) seules les valeurs chromatiques des points d'image se trouvant dans la ou les surfaces de correction sont remplacées par de nouvelles valeurs chromatiques appropriées, qui sont déterminées à partir de valeurs chromatiques appelées de la zone d'action dans le sens d'un lissage de contour et de surface grenues existants dans cette zone, de sorte que l'importance de la surface ou des surfaces de correction déterminées détermine la zone d'image simultanément lissée,

c) le dispositif de marquage, dans le cas d'un contour à lisser, est déplacé le long de celui-ci.

2. Procédé selon la revendication 1, caractérisé en ce que plusieurs surfaces de correction se situent dans la zone d'action, surfaces dont les extensions respectives dans une direction, sont plus importantes que dans l'autre direction, et ceci de sorte que leurs centres se situent au centre de la zone d'action et que les surfaces de correction pivotent réciproquement autour du centre de la zone d'action.

3. Procédé selon la revendication 2, caractérisé en ce que la direction d'action des retouches à l'intérieur de la zone d'action est déterminée par le choix des surfaces de correction correspondantes.

4. Procédé selon la revendication 3, caractérisé en ce que le tracé d'un contour à lisser est déterminé à partir des valeurs chromatiques de la zone d'action et que le choix des surfaces de correction correspondantes est commandé par le tracé ainsi déterminé du contour.

5. Procédé selon une des revendications 1 à 4, caractérisé en ce que des valeurs de départ sont déterminées pour les points d'image de bordure se raccordant respectivement à une surface de correction dans la direction d'action et que les valeurs chromatiques ($F_i$) des points d'image de la surface de correction sont calculées à partir de ces valeurs de départ.

6. Procédé selon la revendication 5, caractérisé en ce que les valeurs de départ ($F_1$; $F_n$) correspondent aux valeurs chromatiques des points d'image de bordure.

7. Procédé selon la revendication 5, caractérisé en ce que les valeurs de départ ($F^*_1$; $F^*_n$) correspondent respectivement à la valeur moyenne calculée à partir des valeurs chromatiques ($F_{ui}$; $F_{vi}$) des points d'image entourant les points d'image de bordure à l'intérieur de la zone d'action.

8. Procédé selon une des revendications 5 à 7, caractérisé en ce que les valeurs chromatiques modifiées ($F_i$) sont déterminées par interpolation, notamment par interpolation linéaire, entre les valeurs de départ.

9. Procédé selon une des revendications 5 à 7, caractérisé en ce que les valeurs chromatiques ($F_i$) sont calculées d'après une fonction prédéfinie.

10. Procédé selon une des revendications 7 à 9, caractérisé en ce que les valeurs chromatiques ($F_1$; $F_n$) des points d'image de bordure sont remplacées par les valeurs moyennes calculées pour augmenter la zone d'action.

11. Procédé selon la revendication 1, caractérisé en ce que la zone d'action ne comporte qu'une surface de correction et que toutes les valeurs chromatiques de la surface de correction sont remplacées par une valeur chromatique ($F^*_0$) calculée à partir des valeurs chromatiques de la zone d'action, notamment par formation d'une valeur moyenne pondérée.

12. Procédé selon une des revendications 1 à 11, caractérisé en ce que le dispositif de marquage est un style de coordonnées.

13. Procédé selon la revendication 12, caractérisé en ce que l'image en couleurs retouchée ou bien non retouchée (originale) ou bien un extrait de couleur retouché ou non retouché est représenté en vue du contrôle visuel sur un récepteur de contrôle de couleurs, une marque lumineuse déplaçable marquant la zone d'action étant surimpressionnée sur l'écran du récepteur de contrôle, et le déplacement de cette marque lumineuse étant synchronisé avec le déplacement du stylet de coordonnées de l'appareil de détection de coordonnées.

14. Procédé selon une des revendications 1 à 13, caractérisé en ce qu'une retouche initiale est annulée par substitution des valeurs chromatiques initiales aux valeurs chromatiques modifiées.

Fig.1

**Fig. 2**

*Fig.3a*

*Fig. 3b*

*Fig.3c*

*Fig. 4*

Fig. 5

Fig. 9

Fig. 6a

Fig. 6b

Fig. 7a

Fig. 7b

Fig. 8

*48* *53* *49*

I | II | III | IV | V | VI — *59*

| 120 | 120 | 40 | 40 | 40 | 40 |
| 120 | 120 | 40 | 40 | 40 | 40 |
| 120 | 120 | 40 | 40 | 40 | 40 |

**A**

F
*60* 120 | 120 | 40 | 40 | 40 | 40

*53* *58* *48* *49*

*1.Korrekturschritt ( K S )*

I | II | III | IV | V | VI — *59*

| 120 | 93 | 40 | 40 | 40 | 40 |
| 120 | 93 | 40 | 40 | 40 | 40 |
| 120 | 93 | 40 | 40 | 40 | 40 |

**B**

F
*60* 120 | 93 | 40 | 40 | 40 | 40

*58'*

*48* *53* *49*

*2 Korrekturschritt*

I | II | III | IV | V | VI

| 120 | 93 | 58 | 40 | 40 | 40 |
| 120 | 93 | 58 | 40 | 40 | 40 |
| 120 | 93 | 58 | 40 | 40 | 40 |

**C**

F
*60* 120 | 93 | 58 | 40 | 40 | 40

*58"*

*53* *49* *48*

*3 Korrekturschritt*

I | II | III | IV | V | VI — *59*

| 120 | 93 | 58 | 46 | 40 | 40 |
| 120 | 93 | 58 | 46 | 40 | 40 |
| 120 | 93 | 58 | 46 | 40 | 40 |

**D**

F
*60* 120 | 93 | 58 | 46 | 40 | 40

*58'''*

*Fig.10*

1. K.S.
2. K.S.
3. K.S.
59

| I | II | III | IV | V | VI |
|---|----|-----|----|---|----|
| 120 | 93 | 58 | 46 | 40 | 40 |
| 120 | 93 | 58 | 46 | 40 | 40 |
| 120 | 93 | 58 | 46 | 40 | 40 |

58'''

A

F
60
120 93 58 46 40 40

1 Wiederholung

1 K S
2 K S
3. K.S.
59

| I | II | III | IV | V | VI |
|---|----|-----|----|---|----|
| 120 | 90 | 65 | 50 | 40 | 40 |
| 120 | 90 | 65 | 50 | 40 | 40 |
| 120 | 90 | 65 | 50 | 40 | 40 |

58'''

B

F
60
120 90 65 50 40 40

2 Wiederholung

1. K S
2 K.S.
3 K S
59

| I | II | III | IV | V | VI |
|---|----|-----|----|---|----|
| 120 | 91 | 69 | 53 | 40 | 40 |
| 120 | 91 | 69 | 53 | 40 | 40 |
| 120 | 91 | 69 | 53 | 40 | 40 |

58'''

C

F
60
120 91 69 53 40 40

Fig. 11

Fig. 12

Fig. 13